# EUROPÄISCHE PATENTANMELDUNG

(11) **EP 3 940 463 A1**
(43) Veröffentlichungstag der Anmeldung: **19.01.2022**
(21) Anmeldenummer: 21000182.2
(22) Anmeldetag: 12.07.2021
(51) Int. Cl.: G05B 17/02, G05B 23/02

(54) **VERFAHREN ZUR SIMULATION VON BETRIEBS/ KOMPONENTENZUSTÄNDEN VON ANLAGEN, INSBESONDERE VON KRAFTWERKSANLAGEN**

(30) Priorität: 13.07.2020 DE 102020004277
(71) Anmelder: BTB Jansky GmbH, 71229 Leonberg (DE)
(72) Erfinder: LANGENSTEIN, Magnus Dr., 71254 Ditzingen (DE); VAN MULUKOM, Arjan, 3532 ER Utrecht (NL)
(74) Vertreter: Jackisch-Kohl, Anna-Katharina

(57) **Zusammenfassung**

Das Verfahren dient zur Simulation von Betriebs/Komponentenzuständen von Anlagen (1), bei dem Komponentencharakteristiken und Prozessdaten von Anlagenkomponenten miteinander verbunden und mit Messwerten aus der Anlage (1) verknüpft werden. Bei diesem Verfahren werden die Prozessdaten der Anlagenkomponenten gemessen und die jeweiligen Unsicherheiten der Prozessdaten erfasst. Die Prozessdaten einschließlich der Unsicherheiten werden einer Validierung unterzogen. Mit den validierten Prozessdaten werden die Komponentencharakteristiken ermittelt, die entsprechend den Prozessdaten mit Unsicherheitswerten versehen und validiert sind.

## Beschreibung

Die Erfindung betrifft ein Verfahren zur Simulation von Betriebs/Komponentenzuständen von Anlagen, insbesondere von Kraftwerksanlagen, nach dem Oberbegriff des Anspruches 1.

Simulationsprogramme werden in der Kraftwerkstechnik unter anderem dazu herangezogen, sog. "What-If"-Szenarien durchzuspielen. So möchte beispielsweise der Anlagenbetreiber wissen, welcher Anlagenwirkungsgrad vorliegt, wenn das Kraftwerk statt unter Volllast mit nur 70% Teillast gefahren wird, ohne die Anlage auch tatsächlich bei dieser Leistung zu betreiben. Mit Hilfe des Simulationsprogrammes werden ein entsprechendes Simulationsmodell erstellt und verschiedene Szenarien durchgespielt.

Die herkömmlichen Simulationsprogramme verwenden konstante Vorgabewerte für z.B. Druck, Temperatur, Massenströme und Komponentenbibliotheken, in denen die Angaben der Komponentenhersteller hinterlegt sind. Solche Komponenten sind beispielsweise Pumpen, Turbinen, Wärmetauscher, Kondensatoren, Generatoren und dgl. Diese Komponenten werden mittels Verbindungen, den sogenannten Streams, im Simulationsmodell miteinander verbunden. Diese Streams entsprechen in der Regel realen Rohrleitungen, die die Verbindungen zwischen den Komponenten herstellen. In den Rohrleitungen befindet sich ein Medium, wie z. B. Wasser, Dampf oder Gas. Die in diesen Rohrleitungen installierten Sensoren, die Messwerte, wie Temperatur, Druck, Massenstrom, liefern, erfassen so den thermodynamischen Zustand des Mediums.

Die Komponenten werden durch Komponentencharakteristiken gekennzeichnet, welche die Hersteller der Komponenten zur Verfügung stellen. Diese Komponentencharakteristiken, in der Regel Kennlinien und Kennfelder, kennzeichnen den aus Berechnungen hergeleiteten theoretischen Istzustand (Neuzustand) der Komponenten.

Da die Komponentencharakteristiken der Hersteller lediglich den Ideal- bzw. den Auslegungszustand der Komponenten repräsentieren, bilden sie den Zustand der Anlage zu keiner Zeit zutreffend ab. Da die verwendeten Vorgabewerte (in der Regel Prozessdaten, wie Druck, Temperatur oder Massenströme) und die Komponentencharakteristiken der Hersteller lediglich Absolutwerte darstellen, hat der Anlagenbetreiber das Problem, dass er lediglich Absolutwerte als Simulationsergebnis erhält.

Der Erfindung liegt die Aufgabe zugrunde, das gattungsgemäße Verfahren so auszubilden, dass der Anlagenbetreiber zuverlässige und belastbare Ergebnisse bei seiner Simulationsberechnung mit zugehörigen Unsicherheiten erhält.

Diese Aufgabe wird beim gattungsgemäßen Verfahren erfindungsgemäß mit den kennzeichnenden Merkmalen des Anspruches 1 gelöst.

Beim erfindungsgemäßen Verfahren wird in einfacher Weise der Ist-Zustand der Anlage berücksichtigt. Hierzu werden zunächst die gemessenen Prozessdaten und die zugehörigen Unsicherheiten dieser Messwerte erfasst. Die Messwerte sind beispielsweise Temperatur, Druck, Volumenströme, Ventilstellungen und dgl. Die ermittelten und erfassten Messwerte einschließlich der zugehörigen Unsicherheiten werden einem mathematisch statistischen Verfahren unterzogen, welches z. B. in der Richtlinie VDI 2048 beschrieben ist. Die Vorgehensweise nach VDI 2048 ist bekannt und wird darum auch nicht näher erläutert. Mit den validierten Prozessdaten werden die validierten Komponentencharakteristiken ermittelt, die für den Anlagenbetreiber in vorteilhafter Weise bereits den Alterungs-, Verschleiß-, Abrasionszustand und dgl. der Anlagenkomponenten berücksichtigen.

Da den Prozessdaten die Unsicherheiten zugeordnet sind, beinhalten aufgrund der Fehlerfortpflanzung auch die auf dieser Basis ermittelten validierten Komponentencharakteristiken Unsicherheiten.

Beim erfindungsgemäßen Verfahren werden Messwerte und Komponentencharakteristiken mit deren Unsicherheiten berücksichtigt. Konstante Vorgabewerte können sowohl mit als auch ohne deren Unsicherheiten berücksichtigt werden. Beim Schließen von Massen-, Energie- und Stoffbilanzen werden die für den Prozess wahrscheinlichsten Werte und deren Unsicherheiten berechnet.

Unter Berücksichtigung von Messwerten, Vorgabewerten und Komponentencharakteristiken kann eine qualitätsgesicherte Simulation und Berechnung der What-If-Szenarien einschließlich der Ermittlung von Ergebnisunsicherheiten erfolgen.

Vorteilhaft werden zur Ermittlung von Enthalpien Dampftafeln mit Unsicherheiten nach internationalem Standard herangezogen, so dass auch in diesem Falle zuverlässige und belastbare Ergebnisse erhalten werden.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung die Vorgehensweise zur Optimierung einer energie- und verfahrenstechnischen Anlage auf Grundlage einer Datenvalidierung nach VDI 2048,
- Fig. 2: ein Schema eines erfindungsgemäßen Simulationsansatzes,
- Fig. 3 bis 5: Beispiele für Komponentencharakteristiken, die für das erfindungsgemäße Simulationsverfahren eingesetzt werden.

Mit dem im Folgenden beschriebenen Verfahren ist es möglich, eine zuverlässige Kraftwerkssimulation unter Berücksichtigung unterschiedlichster Kraftwerksparameter vorzunehmen, die unterschiedlichste Aspekte berücksichtigen, wie eine Alterung, einen Verschleiß, eine Abrasion und dergleichen von Anlageteilen.

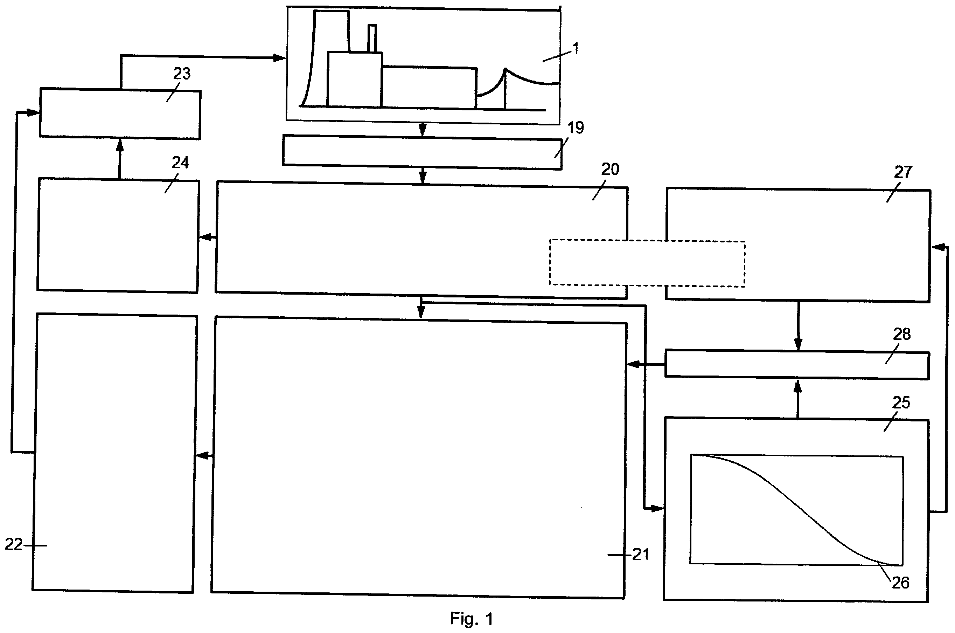

Fig. 1 zeigt in schematischer Darstellung die Aufnahme und Auswertung verschiedener Parameter einer Anlage 1, die beispielhaft ein Kraftwerk ist. Es hat unterschiedlichste Anlagenteile, wie Pumpen, Turbinen, Kondensatoren, Generatoren, Ventile, Leitungen und dgl., die in Fig. 1 nicht im Einzelnen dargestellt sind.

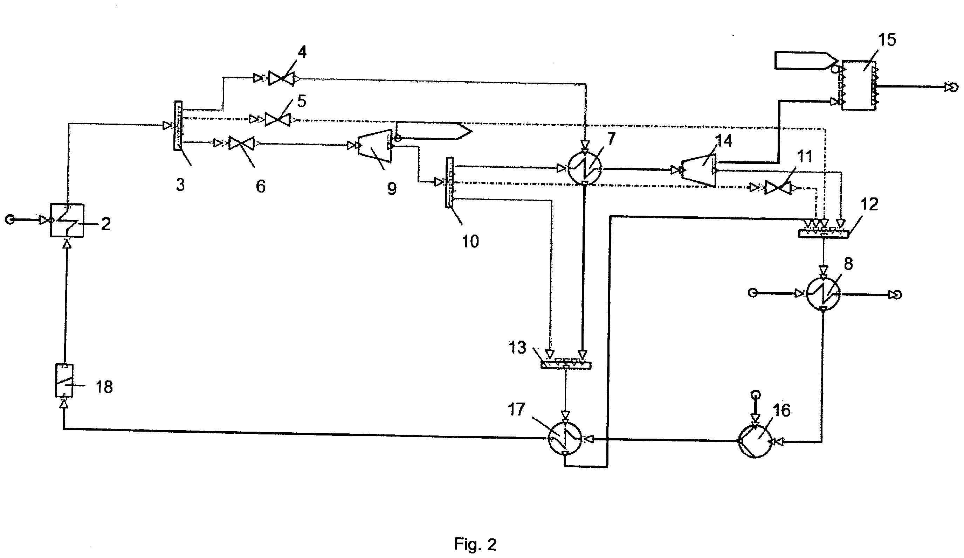

Fig. 2 zeigt in schematischer Darstellung ein Simulationsmodell der Anlage 1, anhand dessen die Komponenten eines derartigen Kraftwerkes erläutert werden. Es hat beispielhaft einen Dampferzeuger 2, der an einen Verteiler 3 angeschlossen ist. Er verbindet den Dampferzeuger 2 über Ventile 4, 5 mit einem Wasserabscheider 7 und einem Kondensator 8 sowie über ein Ventil 6 mit einer Turbine 9. Sie ist über einen weiteren Verteiler 10 mit dem Wasserabscheider 7, über ein Ventil 11 mit einem Verteiler 12 verbunden und an einen Verteiler 13 angeschlossen.

Der Wasserabscheider 7 ist der Turbine 14 vorgeschaltet. Der Kondensator 8 ist an die Saugseite einer Pumpe 16 angeschlossen, an deren Druckseite ein Vorerhitzer 17 angeschlossen ist. Zwischen dem Vorerhitzer 17 und dem Dampferzeuger 2 befindet sich ein Wärmetauscher 18.

Der Wasserabscheider 7 ist nicht nur mit der nachfolgenden Turbine 14 verbunden, sondern auch an den Verteiler 13 anschließbar. An ihn ist der Wasserabscheider 7 ebenfalls angeschlossen.

Der Kondensator 8 sorgt dafür, dass der Dampf wieder zurück in Flüssigkeit umgewandelt wird. Sie wird von der Pumpe 16 über den Vorerhitzer 17 dem Dampferzeuger 2 zugeführt, der die Flüssigkeit wieder in Dampf umwandelt. Die Flüssigkeit/Dampf-Ströme gelangen über den Verteiler 3 und das Ventil 4 zum Wasserabscheider 7. Ein anderer Teil der Flüssigkeit/Dampf-Ströme gelangt über das Ventil 6, die Turbine 9 und den Verteiler 10 zum Verteiler 13. Im Wasserabscheider 7 wird der Flüssigkeit/Dampf-Strom in einen Flüssigkeits- und in einen Dampfstrom aufgeteilt. Der Flüssigkeitsstrom gelangt zum Verteiler 13, während der reine Dampfstrom der Turbine 14 zugeführt wird.

Am Verteiler 13 werden der Flüssigkeitsstrom sowie der Flüssigkeit/Dampf-Strom dem Vorerhitzer 17 zugeleitet, der den Dampf wieder in Flüssigkeit umwandelt. Sie wird in der beschriebenen Weise durch die Pumpe 16 dem Dampferzeuger 2 zugeführt.

Der anhand der Fig. 2 beschriebene Aufbau des Kraftwerkes 1 und dessen Funktionsweise sind nur beispielhaft zu verstehen. Eine Beschränkung auf eine solche Gestaltung und Funktionsweise ist damit nicht verbunden.

Im Folgenden wird beschrieben, wie eine energie- und verfahrenstechnische Anlage 1, wie das Kraftwerk, auf der Grundlage einer VDI-2048-konformen Daten- und Komponentencharakteristiken-Validierung optimiert wird.

Wenn die Richtlinie VDI 2048 angesprochen ist, schließt dies selbstverständlich nicht aus, dass auch andere geeignete Richtlinien für die Validierung herangezogen werden können.

Bei einer Validierung wird ein überbestimmtes Gleichungssystem gelöst. Hierbei ist die Anzahl der Gleichungen größer als die Anzahl der Unbekannten. Hieraus folgt, dass sog. Redundanzen vorliegen (Redundanz > 0). Es wird immer mit einem vollständigen Wert gearbeitet, d. h. "vollständiger Wert = Absolutwert ± zugehörige Unsicherheit". Mit Hilfe der Fehlerfortpflanzung wird darauf basierend ein vollständiges Ergebnis ermittelt, d. h. "vollständiges Ergebnis = Absolutwert ± zugehörige Unsicherheit".

Bei den Komponentencharakteristiken handelt es sich um qualitätsgesicherte, den tatsächlichen Zustand der Anlage beschreibende Kennlinien. Die Kennlinien sind so erstellt, dass sie auch Unsicherheiten aus der Fehlerfortpflanzung als auch Effekte wie Alterung, Verschleiß, Abrasion der Anlagenteile und dgl. umfassen.

Auch die Prozessdaten der Anlage werden so gebildet, dass die beschriebenen Unsicherheiten (Toleranzen) erfasst sind. Bei diesen Prozessdaten werden alle, (auch redundante) Informationen einschließlich deren Unsicherheiten erfasst. Auch die bei solchen Anlagen verwendeten Dampftafeln berücksichtigen Unsicherheiten.

Im Schritt 19 werden die Prozessdaten (auch Rohdaten oder Messdaten genannt) der Anlage 1 gemessen, bei denen es sich beispielsweise um Temperaturwerte, Druckwerte, Volumenströme, Ventilstellungen und dgl. handeln kann. Die Daten 19 werden im Schritt 20 einer Datenvalidierung nach VDI 2048 unterzogen. Die validierten Messwerte und Daten werden aufgezeichnet bzw. gespeichert und im Schritt 21 visualisiert. Hierbei können nicht nur die validierten Werte erfasst und beobachtet werden, sondern es können auch Angaben über den Zeitpunkt der Messung, das Datum der Messung, den Ort der Messung und dgl. festgehalten werden.

Dies kann beispielsweise in Form von Tabellen, von Prozessflussdiagrammen und dgl. erfolgen. Die Überwachung bzw. Speicherung kann auf externen Servern, aber beispielsweise auch in der Cloud erfolgen.

Die Überwachung der Werte kann dem Betreiber der Anlage 1 Hinweise für einen nicht optimalen Betrieb der Anlage 1 geben, was im Schritt 22 erfolgt. So können die validierten Daten Hinweise auf einen nicht optimalen Betreib geben, beispielsweise auf interne oder externe Leckagen in der Anlage 1 hinweisen. Auch kann der Anlagenbetreiber Hinweise auf Leistungsverluste, fehlerhafte oder driftende Messungen und dgl. erhalten. Diese Indikationen werden dazu herangezogen, über einen Optimierungsschritt 23 die Anlage 1 so neu einzustellen, dass die festgestellten Mängel beseitigt sind. Sollte sich bei der Prozessdatenvalidierung im Schritt 20 herausstellen, dass systematische Abweichungen auftreten, dann können im Schritt 24 entsprechende Korrekturfaktoren bestimmt werden, die im Optimierungsschritt 23 berücksichtigt werden.

Aufgrund der validierten Prozessdaten (Schritt 20) werden im Schritt 25 die Komponentencharakteristiken ermittelt. Fig. 1 zeigt beispielhaft eine Kennlinie 26 als eine Komponentencharakteristik. Da diese Kennlinie aus den nach VDI 2048 validierten Prozessdaten bestimmt worden ist, ist sie mit einer Unsicherheit versehen. Die Komponentencharakteristiken berücksichtigen somit Alterungs-, Verschleiß-, Abrasionserscheinungen und dgl sowie ebenfalls Unsicherheiten aus der Fehlerfortpflanzung.

Bei der What-If-Analyse (Schritt 27) werden die im Schritt 25 erzeugten Komponentencharakteristiken 26 herangezogen und die bei der Analyse berechneten Werte (Schritt 28) ermittelt. Sie werden als Referenzwerte aufgezeichnet bzw. gespeichert und im Schritt 21 visualisiert.

Ein entscheidender Vorteil dieses hier beschriebenen neuen Verfahrens ist, dass sowohl das Modell zur Prozessdatenvalidierung nach VDI 2048 als auch das Modell zur Simulation von What-If-Szenarien identisch ist.

Demnach wird aufgrund desselben Modells eine wichtige Ebene der Qualitätssicherung erfüllt.

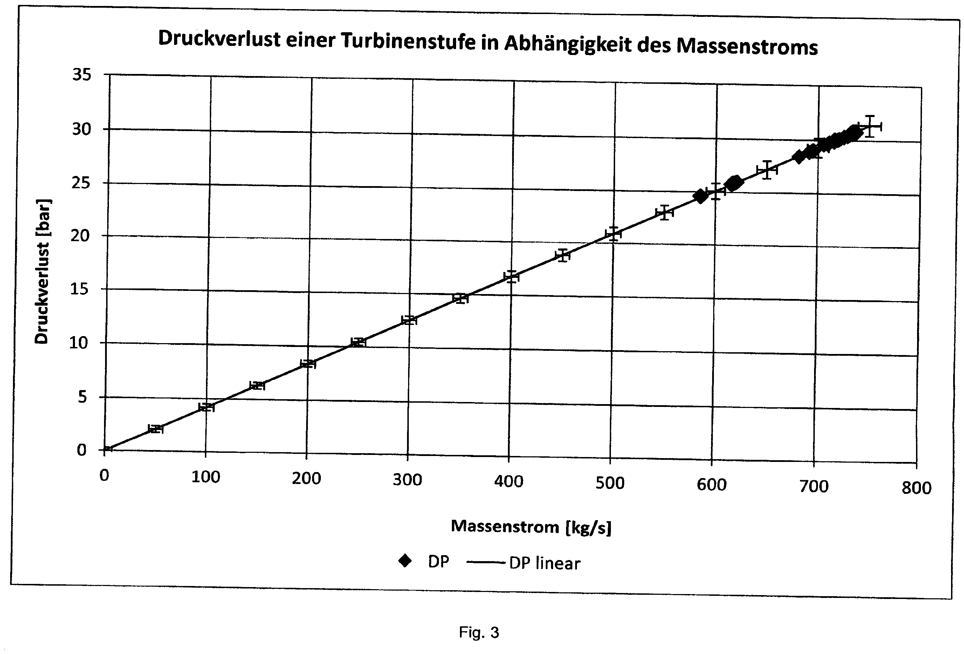

Die Fig. 3 bis 5 zeigen beispielhaft drei unterschiedliche Kennlinien der Anlage 1. Dabei werden jeweils validierte Werte verwendet, damit die Mas-sen-, Energie- und Stoffbilanzen tatsächlich geschlossen sind und keine Widersprüche erzeugen.

In Fig. 3 ist der Druckverlust einer Turbinenstufe in Abhängigkeit vom Massenstrom dargestellt. Mit zunehmendem Massenstrom nehmen die Druckverluste zu.

Beispielhaft sind die Druckverluste nur in einem bestimmten Bereich des Massenstromes erfasst worden. Die Kennlinie ist in Bezug auf die gemessenen Werte gemittelt worden. Sie verläuft linear. Die eingezeichneten Fehlerbalken zeigen die möglichen Unsicherheiten in x- und in y-Richtung.

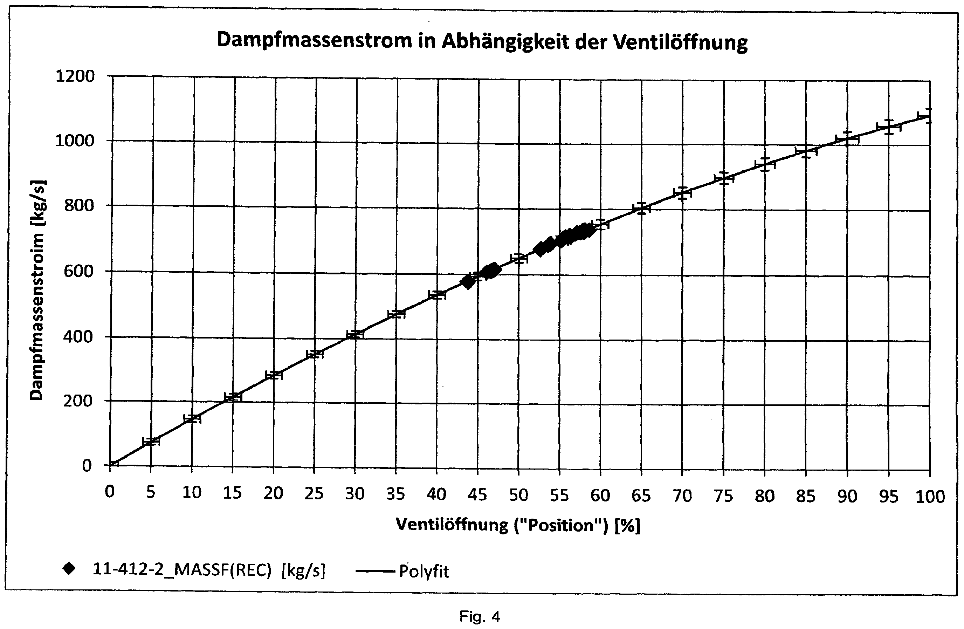

Die Kennlinie gemäß Fig. 4 kennzeichnet den Dampfmassenstrom in Abhängigkeit von der Ventilöffnung. Auch in diesem Falle ist der Dampfmassenstrom nur in einem bestimmten Öffnungsbereich des Ventiles gemessen worden. Der restliche Teil der Kennlinie ist extrapoliert worden. Auch hier sind die Fehlerbalken eingezeichnet, die zeigen, dass Unsicherheiten in x- und in y-Richtung auftreten können.

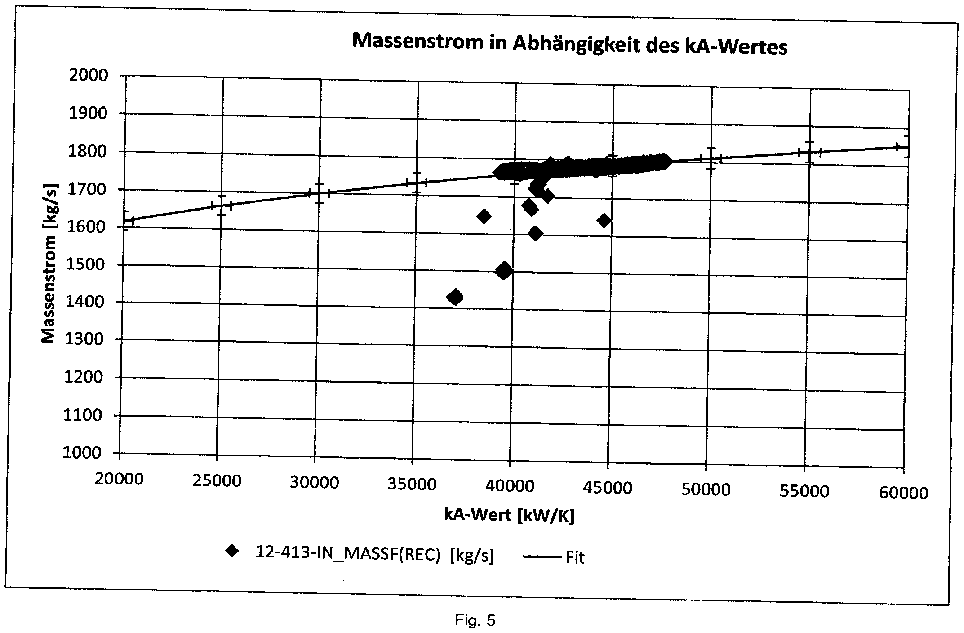

Die Kennlinie gemäß Fig. 5 zeigt den Massenstrom in Abhängigkeit vom kA-Wert bei einem Wärmeübertrager. Die Messung erfolgt, ähnlich wie bei den vorigen Beispielen, nur in einem bestimmten Messbereich. Der kA-Wert kann selber nicht gemessen werden, sondern wird anhand seines Betriebspunktes aus der geschlossenen Energiebilanz berechnet. Die Kennlinie ist wiederum extrapoliert worden. Die Unsicherheiten in x- und in y-Richtung sind durch die Fehlerbalken gekennzeichnet.

Diese Kennlinien werden für sog. What-If-Szenarien im Schritt 27 herangezogen.

Bisher sind die Komponentencharakteristiken der Hersteller auf den Neuzustand der Anlagenteile, wie beispielsweise der Pumpen, Turbinen, Kondensatoren und dgl. bezogen. Die Komponentencharakteristiken der Hersteller geben den Gut- bzw. Neuzustand der Komponenten an, den diese nach längerer Einsatzdauer der Anlage selbstverständlich nicht mehr aufweisen.

Mit dem neuen Simulationsverfahren, das im Anschluss an den beschriebenen Validierungsprozess durchgeführt wird, wird das hierfür aufgebaute Validierungsmodell des Prozesses (Redundanz >0) in ein Simulationsmodell überführt (Redundanz = 0). Damit ist gewährleistet, dass nur ein Modell zur Validierung nach VDI 2048 und zur Simulation verwendet wird. Mit dem Simulationsverfahren werden unter Einhaltung aller und auch einzelner Merkmale alle verfügbaren Messwerte und deren Unsicherheit berücksichtigt. Auch die Werte der Dampftafeln, die zur Ermittlung von Enthalpien herangezogen werden, werden mit Unsicherheiten belegt und in die Berechnung einbezogen.

Auf diese Weise ergeben sich in der beschriebenen Weise aktuelle, den augenblicklichen Zustand der Anlage 1 charakterisierende Prozesswerte, aus denen in einem weiteren Schritt die tatsächlichen Komponentencharakteristiken ermittelt werden (Schritt 25). Sie enthalten bereits diejenigen Effekte, die beispielsweise durch eine Alterung, einen Verschleiß, durch eine Abrasion oder dgl. der Anlagenteile bewirkt worden sind.

Aufgrund der Fehlerbalken ist ein Unsicherheitsbereich bestimmt, der dem Anlagenbetreiber nicht mehr nur einen einzigen Wert angibt, sondern ihm verlässliche Angaben unter Berücksichtigung von Unsicherheiten liefert. Für die Simulationsberechnung bei der What-If-Strategie wird nicht mehr, wie bisher üblich, eine einzige Kennlinie herangezogen, sondern zusätzlich ein Unsicherheitsbereich, der sich aus der Fehlerfortpflanzung der Unsicherheiten validierter Messwerter bei der Erstellung der Kennlinie ergibt.

Auf den validierten Prozessdaten und den validierten Komponentencharakteristiken wird eine qualitätsgesicherte Simulation und Berechnung der What-If-Szenarien inklusive des vollständigen Nachweises der Ergebnisunsicherheiten durchgeführt. Mit vollständigen Werten, Komponentencharakteristiken mit Unsicherheiten und der Dampftafel inklusive deren Unsicherheiten werden Simulationsergebnisse basierend auf der Fehlerfortpflanzungsrechnung ermittelt, welche dann als vollständige Simulationsergebnisse vorliegen, wobei gilt: vollständiges Simulationsergebnis = Absolutwert ± zugehörige Unsicherheit.

Da bei dem neuen Verfahren alle Messwerte, auch Redundanzen, einschließlich ihrer Unsicherheiten berücksichtigt werden, basieren die Simulationen und ihre Ergebnisse auf qualitätsgesicherten, belastbaren Prozessdaten. Die Ergebnisse sind dementsprechend mit Unsicherheiten ausgewiesen, was für den Anlagenbetreiber erhebliche Vorteile bringt. Da dem Anlagenbetreiben Unsicherheitswerte mitgeteilt werden, kann der Betreiber sich nach den unteren Werten der Unsicherheiten richten.

Um das Ergebnis zu erhalten, wird in der beschriebenen Weise das tatsächliche Komponentenverhalten ermittelt, da die jeweiligen Komponenten im Ist-Zustand gemessen werden. Die qualitätsgesicherten Kennlinien beschreiben den tatsächlichen Anlagenzustand, wobei die Kennlinien zusätzlich mit Unsicherheiten versehen sind, so dass der Anlagenbetreiber auch Abweichungen berücksichtigen kann.

Gleiches gilt auch für die nach VDI 2048 validierten Prozessdaten. Auch sie bieten Informationen einschließlich von Unsicherheiten, die es dem Anlagenbetreiber ermöglichen, die gewünschten What-If-Szenarien durchzuspielen. Auch die Dampftafeln sind mit den entsprechenden Unsicherheiten versehen. Im Übrigen sind alle Prozessdaten qualitätsgesichert.

Somit kann mit den Komponentencharakteristiken und den Prozessdaten eine verlässliche Simulation durchgeführt werden, die insbesondere Ergebnisunsicherheiten berücksichtigt. Dies ist zuverlässig gewährleistet, weil die Eingangsdaten nach VDI 2048 qualitätsgesichert sind. Die gemessenen Daten zeigen den augenblicklichen Zustand der Anlage 1, so dass diese Daten eine belastbare und verlässliche Grundlage für eine Simulation und What-If-Analysen ermöglicht. Die Simulationsergebnisse, welche die Unsicherheiten in den Komponentencharakteristiken (Kennlinien) und in den Prozessdaten berücksichtigen, spiegeln den tatsächlichen Zustand der Anlage dar, so dass der Betreiber belastbare und der Realität entsprechende What-If-Analysen durchführen kann. Die What-If-Szenarien werden durchgeführt, um beispielsweise die Wirkung auf die Leistung einer Anlage, auf das Design neuer Komponenten und dgl. durchzuspielen. Hierbei können beispielsweise ein Teillastverhalten des Prozesses, der Einfluss von internen und externen Leckagen, die Bewertung von Nachrüstungen von Anlagenteilen, von Leistungssteigerungen und dgl. simuliert werden. Da sämtliche Anlagenteile vermessen und die ermittelten Daten und Komponenten mit den Unsicherheiten angegeben werden, ergibt sich für den Anlagenbetreiber eine zuverlässige Bewertung der von ihm vorgenommenen Simulationen. Das Simulationsergebnis ermöglicht es dem Betreiber, bei Bedarf seine Anlage entsprechend der simulierten Verhältnisse umzubauen oder einzustellen.

## Patentansprüche

1. Verfahren zur Simulation von Betriebs/Komponentenzuständen von Anlagen, insbesondere von Kraftwerksanlagen, bei dem Komponentencharakteristiken und Prozessdaten von Anlagenkomponenten miteinander verbunden und mit Messwerten aus der Anlage verknüpft werden,
**dadurch gekennzeichnet, dass** die Prozessdaten der Anlagenkomponenten gemessen und hierbei die jeweiligen Unsicherheiten der Prozessdaten erfasst werden, dass die Prozessdaten einschließlich ihrer Unsicherheiten einer Validierung, z.B. nach VDI 2048, unterzogen werden, und dass mit diesen validierten Prozessdaten die Komponentencharakteristiken ermittelt werden, die entsprechend den Prozessdaten mit Unsicherheitswerten versehen und z.B. nach VDI 2048 validiert sind.

2. Verfahren nach Anspruch 1,
**dadurch gekennzeichnet, dass** mit den validierten Prozessdaten und Komponentencharakteristiken eine What-If-Analyse durchgeführt wird.

3. Verfahren nach Anspruch 1 oder 2,
**dadurch gekennzeichnet, dass** zur Messung Dampftafeln mit Unsicherheitsangaben herangezogen werden.

4. Verfahren nach einem der Ansprüche 1 bis 3,
**dadurch gekennzeichnet, dass** zur Erzielung redundanter Messwerte wenigstens zwei Messungen an derselben Stelle im Prozess bzw. in der Anlage (1) durchgeführt werden.
